# EUROPEAN PATENT APPLICATION

(11) **EP 4 477 500 A1**
(43) Date of publication of application: **18.12.2024**
(21) Application number: 23842105.1
(22) Date of filing: 30.06.2023
(51) Int. Cl.: B62D 25/08

(54) **SHOCK TOWER CONNECTING STRUCTURE, FRONT ENGINE COMPARTMENT STRUCTURE, AND VEHICLE**

(30) Priority: 20.07.2022 CN 202210881336
(71) Applicant: Voyah Automobile Technology Company Ltd., Hanyang District Wuhan City, Hubei 430050 (CN)
(72) Inventor: QU, Gang, Wuhan, Hubei 430050 (CN); HOU, Chunsheng, Wuhan, Hubei 430050 (CN); YUN, Tao, Wuhan, Hubei 430050 (CN); ZHOU, Zhongbiao, Wuhan, Hubei 430050 (CN); ZHANG, Zhe, Wuhan, Hubei 430050 (CN); HUANG, Bo, Wuhan, Hubei 430050 (CN); HAN, Jianyong, Wuhan, Hubei 430050 (CN); YUAN, Dong, Wuhan, Hubei 430050 (CN); JI, Longhui, Wuhan, Hubei 430050 (CN); XU, Qi, Wuhan, Hubei 430050 (CN)
(74) Representative: Valet Patent Services Limited
(86) International application number: PCT/CN2023/105304
(87) International publication number: WO 2024/017040

(57) **Abstract**

The application relates to a shock-tower connection structure, a front-compartment structure and a vehicle. The shock-tower connection structure includes: a shock-absorber body (1), which may include a first base surface (11) for connecting to a vehicle; the first base surface (11) corresponds to a first contour circle (a) of different positions on different models of vehicles. a shock-tower assembly (2), on which a second base surface (21) for connecting to the first base surface (11) is disposed; the first contour circles (a) on the different models of vehicles are all tangent to the second contour circle (b) of the second base surface (21). Since the first contour circles (a) on the different models of vehicles are all tangent to the second contour circle (b) of the second base surface (21), such that when the shock-absorber body (1) is connected to any models of vehicles, the shock-absorber bodies (1) all can be installed on the second base surface (21), and thus there is no need to develop different shock tower assemblies (2) for the different models of vehicles. The requirements of different installation positions corresponding to the shock-absorber bodies (1) on the different models of vehicles can be met, thereby effectively reducing development costs and improving an applicability of the shock-tower assembly (2).

## Description

### CROSS-REFERENCE TO RELATED APPLICATIONS

This application claims the priority to Chinese patent application No. 202210881336.8 filed on July 20, 2022, the entire content of which is incorporated herein by reference.

### TECHNICAL FIELD

The application relates to the field of automobile technology, and particularly to a shock-tower connection structure, a front-compartment structure, and a vehicle.

### BACKGROUND

A shock-tower connection structure of an automobile is an important component of a front compartment. The shock-tower connection structure is connected to a shock absorber by bolts. During driving, tires are subjected to vibration excitation in all directions from a road surface, causing a vibration of a vehicle body. The vibration is directly transmitted to the shock-tower connection structure through the shock absorber. Therefore, a dynamic stiffness performance of the shock-tower connection structure has a great influence on a NVH (Noise Vibration Harshness) performance of an entire vehicle.

In related technologies, different models of vehicles can be developed based on a same technical foundation such as most basic parameters and characteristics, that is, the different models of vehicles can be developed based on a same platform. When the shock absorbers are developed to be used in the different models of vehicles based on the same platform, the shock absorbers for the different models of vehicles are often developed based on only a single model without fully considering a platform-sharing strategy that the shock-tower connection structure can be used in the different models of vehicles based on the same platform, resulting in that the shock absorbers that are used in the different models of vehicles based on the same platform have different installation positions for the different models of vehicles. Therefore, it is required to develop one shock-tower connection structure for each model of vehicle since the shock absorbers have different installation positions on the different models of vehicles, resulting in high development costs.

### SUMMARY

The application provide a shock-tower connection structure, a front-compartment structure and a vehicle, intending to solve a problem of high cost in developing the shock-tower connection structure for different models of vehicles.

According to a first aspect of the application, a shock-tower connection structure is provided, which includes: a shock-absorber body, including a first base surface for connecting to a vehicle; and the first base surface corresponds to a first contour circle of different positions on different models of vehicles. A shock-tower assembly, on which a second base surface for connecting to the first base surface is disposed; the first contour circles on the different models of vehicles each are tangent to a second contour circle of the second base surface; the first base surface is polygonal and tangent to the first contour circle a, and the first base surface is provided with a plurality of first mounting holes spaced apart along a circumference direction of a center of the first contour circle, and the second base surface is provided with second mounting holes corresponding to the first mounting holes thereon; and a first reinforcement plate and a second reinforcement plate; a side wall of the shock-tower assembly has a reservation surface for connecting the first reinforcement plate and the second reinforcement plate when the shock-tower assembly is installed on the different models of vehicles; the first reinforcement plate and the second reinforcement plate are fixedly connected to corresponding positions on the reservation surface.

According to a second aspect of the application, a front-compartment structure is provided, including the shock-tower connection structure described above.

According to a third aspect of the application, a vehicle is provided, including the front-compartment structure described above.

### BRIEF DESCRIPTION OF DRAWINGS

In order to more clearly illustrate the technical solutions in the embodiments of the disclosure, the accompanying drawings required for use in the description of the embodiments will be briefly introduced in the following. Obviously, the accompanying drawings described below are only some embodiments of the disclosure. For those skilled in the art, other accompanying drawings can be obtained based on these drawings without creative work.
FIG. 1 is a schematic diagram of a shock-tower connection structure according to some embodiments of the application;
FIG. 2 is a schematic diagram of a shock-absorber body of a shock-tower connection structure according to some embodiments of the application;
FIG. 3 is a schematic diagram of a first contour circle corresponding to a first base surface of a shock-absorber body of a shock-tower connection structure and a second contour circle corresponding to a second base surface of the shock-tower assembly of the shock-tower connection structure according to some embodiments of the application;
FIG. 4 is an exploded view of a shock-tower assembly of a shock-tower connection structure according to some embodiments of the application; and
FIG. 5 is a cross-sectional view taken along a section line A-A in FIG. 1.

Reference numerals: 1, shock-absorber body; 11, first base surface; 12, first mounting hole; 2, shock-tower assembly; 21, second base surface; 22, second mounting hole; 23, shock-tower body; 24, front wheel cover; 25, reservation surface; 3, front longitudinal beam; 4, front-compartment upper side beam; 41, first reinforcement plate; 42, second reinforcement plate; a, first contour circle; b, second contour circle.

### DESCRIPTION OF EMBODIMENTS

The technical solutions in the embodiments of the application will be clearly and completely described below in conjunction with the accompanying drawings in the embodiments of the application. Obviously, the described embodiments are only some embodiments, rather than all the embodiments of the application. Based on the embodiments in the application, all other embodiments obtained by those skilled in the art without making any creative work shall fall within a scope sought for by the application.

A shock-tower connection structure of an automobile is an important component for a front compartment. The shock-tower connection structure is connected to a shock absorber by bolts. During driving, a road surface gives vibration excitation on tires in all directions, causing a vehicle body to vibrate. A vibration is directly transmitted to the shock-tower connection structure through the shock absorber. Therefore, a dynamic stiffness performance of the shock-tower connection structure has a great influence on a NVH performance of an entire vehicle.

In related technologies, different models of vehicles can be developed based on a same technical foundation such as most basic parameters and characteristics, that is, the different models of vehicles can be developed based on a same platform. When the shock absorbers is developed for use in the different models of vehicles based on the same platform, the shock absorbers for the different models of vehicles are often developed based on only a single model, without fully considering a platform-sharing strategy for the shock-tower connection structure for use in the different models of vehicles based on the same platform, resulting in that the shock absorbers for use in different models of vehicles based on the same platform have different installation positions for a respective model of vehicle. Therefore, when the shock-tower connection structure is developed, a shock-tower connection structure needs to be developed for each model to meet requirements for different installation positions of the shock absorbers on the different models of vehicles, which results in high development costs.

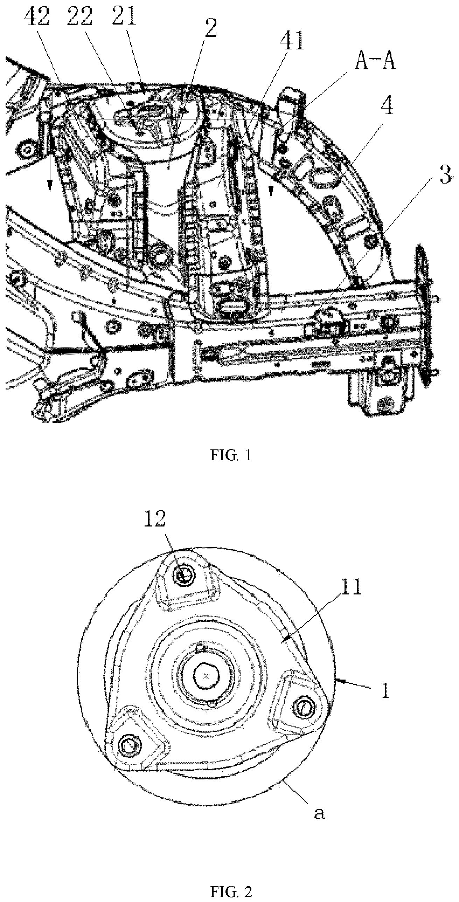

According to a first aspect of the application, a shock-tower connection structure is provided. FIG. 1 is a schematic diagram of a shock-tower connection structure according to some embodiments of the application; FIG. 2 is a schematic diagram of a shock-absorber body of a shock-tower connection structure according to some embodiments of the application. As shown in FIG. 1 and FIG. 2, the shock-tower connection structure includes a shock-absorber body 1 which may include a first base surface 11 for connecting to a vehicle. The first base surface 11 corresponds to a first contour circle a of different positions on different models of vehicles.

The shock-absorber body 1 has different installation position in the different models of vehicles. For example, a position of the shock-absorber body 1 relative to a vehicle body in a SUV model of vehicle is different from that in a Sedan model of vehicle. The shock-absorber body 1 is connected to the shock-tower assembly 2 in the vehicle through the first base surface 11.

In some embodiments, after the shock-absorber body 1 is connected to the shock-tower assembly 2 in a model of vehicle through the first base surface 11, an outer contour of the first base surface 11 is installed at a corresponding position on the second base surface 21 of the shock-tower assembly 2, at this time the outer contour of the first base surface 11 is a first contour circle a of the first base surface 11 of the shock-absorber body 1 in this model of vehicle. Positions, where the first base surfaces 11 of the shock-absorber bodies 1 are located in two models of vehicles, are different, resulting in that the first contour circles a are at different positions in the two models of vehicles. Therefore, as long as the first contour circles a in the two models of vehicles can fall within a second base surface 21 of a same shock-tower assembly 2, the same shock-tower assembly 2 can meet connection requirements for the shock-absorber bodies 1 of different models of vehicles.

In some embodiments, the shock-tower connection structure may include a shock-tower assembly 2, on which a second base surface 21 for connecting to the first base surface 11 is disposed. The first contour circles a on the different models of vehicles each can be tangent to the second contour circle b of the second base surface 21.

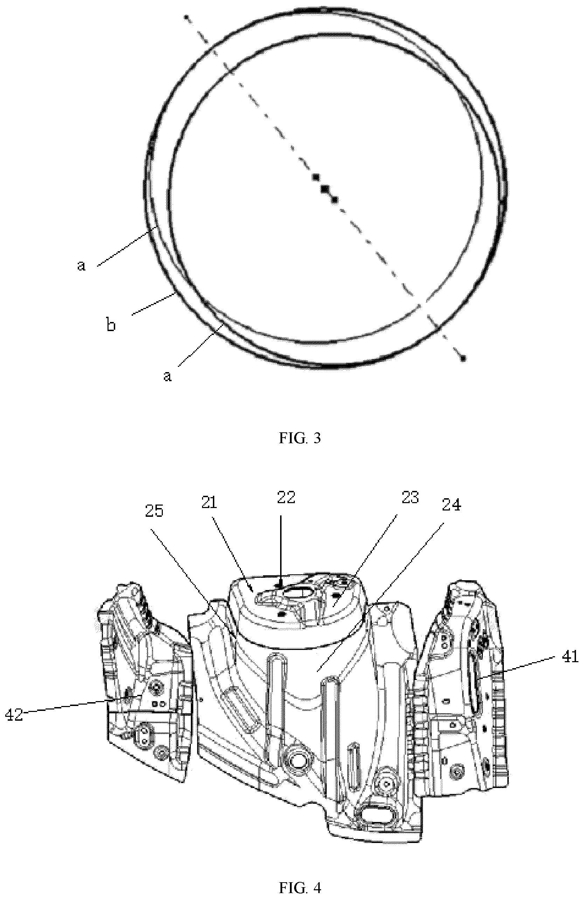

FIG. 3 is a schematic diagram of a first contour circle corresponding to a first base surface of a shock-absorber body of a shock-tower connection structure and a second contour circle corresponding to a second base surface of the shock-tower assembly of the shock-tower connection structure according to some embodiments of the application. As shown in FIG. 3, in some embodiments, the models may include a SUV model and a Sedan model, and two first contour circles a in the SUV model of vehicle and the Sedan model of vehicle each are tangent to the second contour circle b of the second base surface 21 of the shock-tower assembly 2. In this way, after the shock-tower assembly 2 is installed in two models of vehicles, no matter the shock-tower assembly 2 for which model of vehicle the shock-absorber body 1 is installed on, the first contour circles a corresponding to the first base surfaces 11 are within the second contour circle b of the second base surface 21, thereby achieving a goal of meeting different connection requirements of shock-absorber bodies 1 by installing a same shock-tower assembly 2 in the different models of vehicles.

In some embodiments, two first contour circles a corresponding to the first base surfaces of the shock-absorber bodies of two shock-tower connection structures in the two models of vehicles are constructed on a same plane, and a line is drawn along centers of the two first contour circles a, and a midpoint between two centers of the two first contour circles a is a center of the second contour circle b corresponding to the second base surface 21; and two intersection points of an extended line of the line connecting the centers of the two first contour circles a with the two first contour circles a that are farthest from one another are tangent points for the two first contour circles a and the second contour circle b; a circle is drawn with the center of the second contour circle b as a center and with a line of the two intersection points that are farthest from one another as a diameter to obtain the second contour circle b; the second base surface 21 can be configured to accommodate the second contour circle b therein, so as to meet the requirements that the shock absorbers have different installation positions on the different models of vehicles.

In some embodiments, a shape of the second base surface 21 may be a shape of the second contour circle b, or other shapes, as long as the second base surface 21 can completely cover the second contour circle b, so that the first base surfaces 11 for the different models of vehicles when installed can be installed on the second base surface 21.

In a shock-tower connection structure according to some embodiments of the application, during assembly, the first base surface 11 of the shock-absorber body 1 is connected to the second base surface 21 of the shock-absorber tower assembly 2, so that the shock-absorber body 1 can be connected to the vehicle through the shock-absorber tower assembly 2. Since the shock-absorber bodies 1 for the different models of vehicles are installed at different positions on the second base surface 21, after the shock-absorber body 1 is installed on the different models of vehicles, positions of the first contour circles a corresponding to the first base surfaces 11 on the second base surface 21 are different. However, since an outer contour of the second base surface 21 corresponding to the shock-tower assembly 2 according to some embodiments of the application is disposed to accommodate the shapes of the first contour circles a at a plurality of positions, such that the first contour circles a for the different models of vehicles are all tangent to the second contour circle b of the second base surface 21. As a result, the first base surfaces 11 of the shock-absorber bodies 1 for the different models of vehicles all can be installed on the second base surface 21, such that there is no need to develop different shock-tower assemblies 2 for the different models of vehicles. The requirements of different installation positions of the shock-absorber bodies 1 on the different models of vehicles can be met, thereby effectively reducing development costs and improving an applicability of the shock-tower assembly 2.

In some embodiments, the first base surface 11 may be polygonal and tangent to the first contour circle a. The first base surface 11 is provided with a plurality of first mounting holes 12 spaced apart along a circumference direction of a center of the first contour circle a. The second base surface 21 is provided with second mounting holes 22 corresponding to the first mounting holes 12 thereon.

In some embodiments, the first base surface 11 may be configured as different shapes according to actual conditions. As long as the shape of the first base surface 11 is completely located within the first contour circle a, it can be ensured that when the shock-absorber body 1 is installed on the shock-tower assembly 2, the first base surface 11 is completely located on the second base surface 21.

In some embodiments, the first base surface 11 may be a triangle, and three vertices of the triangle are all located on the first contour circle a, that is, a contour of the first base surface 11 is tangent to the first contour circle a. Three first mounting holes 12 are provided and are respectively located at the three vertices. Three second mounting holes 22 are opened on the second base surface 21. Relative positions of the three first mounting holes 12 are the same as relative positions of the three second mounting holes 22. After the first base surface 11 is connected to the second base surface 21, the first mounting holes 12 correspond to the second mounting holes 22 one to one, so that the shock-absorber body 1 can be fixedly connected to the shock-tower assembly 2 by bolts.

In some embodiments, according to different actual conditions, the first base surface 11 may also be a rectangle or other polygon, and the number and relative positions of the first mounting holes 12 and the second mounting holes 22 are the same, so as to meet different installation requirements.

In some embodiments, the shock-tower assembly 2 includes: a shock-tower body 23, on which the second base surface 21 is located; and a front wheel cover 24, disposed with the shock-tower body 23 thereon and connected to the vehicle.

In some embodiments, the front wheel cover 24 is configured to connect to other locations of the vehicle. The shock-tower body 23 is fixedly installed at a top of the front wheel cover 24. The second base surface 21 is located at a top of the shock-tower body 23. The shock-tower body 23 is integrated with the front wheel cover 24 by welding or connection through bolts to form the shock-tower assembly 2 for easy installation.

In some embodiments, the shock-tower connection structure may also include: a front longitudinal beam 3, a bottom surface of the shock-tower assembly 2 being fixedly connected to a top surface of the front longitudinal beam 3; and a front-compartment upper side beam 4, a side wall of the shock-tower assembly 2 are fixedly connected to a side wall of the front-compartment upper side beam 4.

In some embodiments, two front longitudinal beams 3 are provided, and are symmetrically disposed in a front compartment along a length direction of the vehicle. An end of the front longitudinal beam 3 is connected to a front anti-collision beam of the vehicle, and another end of the front longitudinal beam 3 is connected to a vehicle body of the vehicle. Two groups of front-compartment upper side beams 4 are provided, and are respectively disposed on two sides of the front compartment of the vehicle. An end of the front-compartment upper side beam 4 is connected to the front longitudinal beam 3, and another end of the front-compartment upper side beam 4 is connected to the vehicle body of the vehicle, and thus two force transmission paths, i.e., the front longitudinal beam 3 and the front-compartment upper side beam 4, are formed, so as to transmit or weaken a force when the vehicle is subjected to a longitudinal impact force of a small offset collision.

The shock-tower assembly 2 is installed between the front longitudinal beam 3 and the front-compartment upper side beam 4. The front wheel cover 24 at a bottom of the shock-tower assembly 2 is fixedly connected to a top of the front longitudinal beam 3 by spot welding. A side wall of the front wheel cover 24 close to the front-compartment upper side beam 4 is spot welded to a side wall of the front-compartment upper side beam 4, thereby fixing the shock-tower assembly 2.

FIG. 4 is an exploded view of a shock-tower assembly of a shock-tower connection structure according to some embodiments of the application. As shown in FIG. 4, in some embodiments, the shock-tower connection structure may further include:
the first reinforcement plate 41 and the second reinforcement plate 42. Two ends of the first reinforcement plate 41 are fixedly connected to the front longitudinal beam 3 and the front-compartment upper side beam 4, respectively. Two ends of the second reinforcement plate 42 are fixedly connected to the front longitudinal beam 3 and the front-compartment upper side beam 4, respectively. The shock-tower assembly 2 is disposed between the first reinforcement plate 41 and the second reinforcement plate 42, and is fixedly connected to the first reinforcement plate 41 and the second reinforcement plate 42.

The first reinforcement plate 41 and the second reinforcement plate 42 are fixing elements for fixing the shock-tower assembly 2, and each are disposed between the front-compartment upper side beam 4 and the front longitudinal beam 3. In some embodiments, the first reinforcement plate 41 and the second reinforcement plate 42 are disposed at an interval, so that an enclosed space is formed by the front-compartment upper side beam 4, the front longitudinal beam 3, the first reinforcement plate 41 and the second reinforcement plate 42. The shock-tower assembly 2 is disposed in the enclosed space and is fixedly connected to the first reinforcement plate 41, the second reinforcement plate 42, the front longitudinal beam 3 and the front-compartment upper side beam 4 by spot welding at surrounding sides. The shock-tower assembly 2 is fixed by the first reinforcement plate 41, the second reinforcement plate 42, the front longitudinal beam 3 and the front-compartment upper side beam 4, thereby effectively improving a connection strength and rigidity of the shock-tower assembly 2. A multi-layer buffer zone is formed by the shock-tower assembly 2, the first reinforcement plate 41 and the second reinforcement plate 42, so as to absorb an collision energy and protect a safety of people in a cabin when a collision occurs to the vehicle.

In some embodiments, a side of the first reinforcement plate 41 and a side of the second reinforcement plate 42, which are opposite to one another, each are provided with arc-shaped wrap surfaces. A curvature of the wrap surface is adapted to a curvature of an outer wall of the shock-tower assembly 2, so that the outer wall of the shock-tower assembly 2 fits with the wrap surfaces when the shock-tower assembly 2 is fixed between the first reinforcement plate 41 and the second reinforcement plate 42.

In some embodiments, the first reinforcement plate 41 is fitted with a side wall of the front wheel cover 24, and the second reinforcement plate 42 is fitted with another side wall of the front wheel cover 24. At the same time, the front-compartment upper side beam 4 is fixedly connected to a side of the front wheel cover 24. Inner walls of the first reinforcement plate 41 and the second reinforcement plate 42 are configured as arc-shaped wrap surfaces that are adaptive to the curvature of the outer wall of the shock-tower assembly 2, such that the front wheel cover 24 is surrounded and wrapped by the first reinforcement plate 41 and the second reinforcement plate 42 after the first reinforcement plate 41 and the second reinforcement plate 42 are spot-welded to the front wheel cover 24, thereby effectively ensuring a dynamic stiffness and fatigue endurance strength of the front shock-tower assembly 2 after installation.

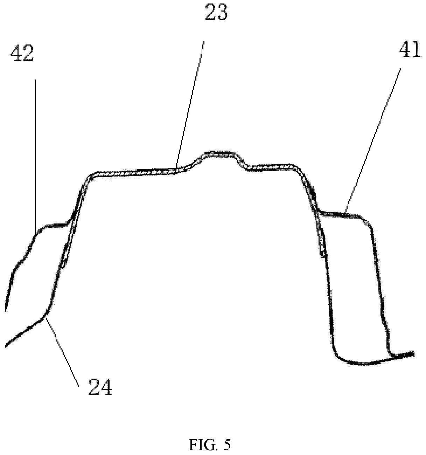

FIG. 5 is a cross-sectional view taken along a section line A-A in FIG. 1. As shown in FIG. 5, in some embodiments, the side wall of the shock-tower assembly 2 has a reservation surface 25 for connecting the first reinforcement plate 41 and the second reinforcement plate 42 when the shock-tower assembly 2 is installed on the different models of vehicles. The first reinforcement plate 41 and the second reinforcement plate 42 are fixedly connected to corresponding positions on the reservation surface 25.

In some embodiments, when the shock-tower assembly 2 is installed on the different models of vehicles, there is a deviation in a longitudinal position of the shock-tower assembly 2, that is, positions of the shock-tower assembly 2 relative to the first reinforcement plate 41 and the second reinforcement plate 42 on the different models of vehicles are different, resulting in different installation positions for the first reinforcement plate 41 and the second reinforcement plate 42 on the front wheel cover 24. Therefore, the reservation surface 25 with sufficient height is reserved on the side wall of the front wheel cover 24, so that the shock-tower assembly 2 can be slid up and down between the first reinforcement plate 41 and the second reinforcement plate 42 during installation to adjust the shock-tower assembly 2 to an appropriate position, and then the first reinforcement plate 41 and the second reinforcement plate 42 can be fixedly connected to the side wall of the front wheel cover 24 to achieve an installation of the shock-tower assembly 2. For example, a position of the shock-tower assembly 2 in a Sedan model of vehicle is lower than that in a SUV model of vehicle. Therefore, the shock-tower assembly 2, when installed in the Sedan model of vehicle, may be translated downward along a Z direction, so that a top surface of the shock-tower assembly 2 can be configured to install the shock-absorber body 1, thereby realizing a versatility of the shock-tower assembly 2.

In some embodiments, relative positions of the first reinforcement plate 41 and the second reinforcement plate 42 can be adaptively changed according to a position of the shock-tower assembly 2, so that the first reinforcement plate 41 and the second reinforcement plate 42 can fit tightly against the side wall of the shock-tower assembly 2.

In some embodiments, a spacing between a top edge of the first reinforcement plate 41 and a top edge of the shock-tower assembly 2, and a spacing between a top edge of the second reinforcement plate 42 and the top edge of the shock-tower assembly 2 are greater than a preset spacing.

During installation, the shock-absorber body 1 is connected to the top surface of the shock-tower assembly 2. Therefore, in order to avoid interfering with an installation of the shock-absorber body 1, other components on the side wall of the shock-tower assembly 2 and the top surface of the shock-tower assembly 2 have an avoidance space for avoiding the shock-absorber body 1. Therefore, a preset spacing is left between welding edges which are used for connecting top edges of the first reinforcement plate 41 and the second reinforcement plate 42 to the shock-tower assembly 2 and a top surface of the shock-tower assembly 2 for the installation of the shock-absorber body 1. The preset spacing may be 3 mm, that is, in different models of vehicles, after a position of the shock-tower assembly 2 in the Z direction is adjusted, the preset spacing between the welding edges which are used for connecting the top edges of the first reinforcement plate 41 and the second reinforcement plate 42 to the shock-tower assembly 2 and the top surface of the shock-tower assembly 2 is always greater than 3 mm, so as to avoid interferences of the top edges of the first reinforcement plate 41 and the second reinforcement plate 42 with the shock-absorber body 1.

Depending on differences between the shock-absorber body 1 and other structures of the vehicle, the preset spacing may be disposed to other values according to situations.

A front-compartment structure is provided according to a second aspect of the application, which includes a shock-tower connection structure according to some embodiments of the application.

A vehicle is provided according to a third aspect of the application, which includes a front-compartment structure according to some embodiments of the application.

A shock-tower connection structure, a front-compartment structure, and a vehicle according to some embodiments of the application can achieve at least the following technical effects: with technical solutions according to some embodiments of the application, during assembly, the first base surface of the shock-absorber body is connected to the second base surface of the shock-absorber tower assembly, so that the shock-absorber body can be connected to the vehicle through the shock-absorber tower assembly. Since the shock-absorber bodies of the different models of vehicles are installed at different positions on the second base surface, after the shock-absorber body is installed on the different models of vehicles, positions of the first contour circles a corresponding to the first base surfaces on the second base surface are different. However, since an outer contour of the second base surface of the shock-tower assembly according to some embodiments of the application is configured to accommodate the shapes of the first contour circles a at a plurality of positions, such that the first contour circles a for the different models of vehicles are all tangent to the second contour circle b of the second base surface. As a result, the first base surfaces of the shock-absorber bodies for the different models of vehicles all can be installed on the second base surface, such that there is no need to develop different shock tower assemblies for the different models of vehicles. The requirements of different installation positions corresponding to the shock-absorber bodies on the different models of vehicles can be met, thereby effectively reducing development costs and improving an applicability of the shock-tower assembly.

As for a device embodiment, since it is basically similar to the method embodiment, the description is relatively simple, and the relevant portions can be referred to the description of the method embodiment.

The various embodiments in this description are described in a progressive manner, and each embodiment focuses on the differences from other embodiments. The same or similar portions between the various embodiments can be referenced to one other.

Although preferred embodiments of the application have been described, additional modifications and variations may be made to these embodiments by those skilled in the art once the basic inventive concepts are known. Therefore, it is intended that the appended claims be interpreted as including the preferred embodiment as well as all modifications and variations that fall within the scope sought for by the application.

Finally, it should be noted that, in this application, relational terms such as first and second and so on are merely configured to distinguish one entity or operation from another entity or operation, and do not necessarily require or imply any actual relationship or order between these entities or operations. Moreover, the terms "comprises", "includes", or any other variations thereof are intended to cover non-exclusive inclusion, such that a process, method, article, or terminal device that includes a list of elements includes not only those elements, but also other elements not explicitly listed, or also includes elements that are inherent to such process, method, article, or terminal device. Without further restrictions, an element defined by the phrase "comprising a " does not exclude the existence of other identical elements in the process, method, article or terminal device comprising the element.

The shock-tower connection structure, front-compartment structure and vehicle provided by the present application are introduced in detail above. Some embodiments are used in this application to illustrate the principles and implementation methods of the present application. The description of the above embodiments is only configured to help understand the method and core idea of the present application. At the same time, for those skilled in the art, according to the idea of the present invention, there will be changes in the specific implementation method and application scope. In summary, the content of this description should not be understood as a limitation on the present application.

## Claims

1. A shock-tower connection structure, comprising:
a shock-absorber body (1), comprising a first base surface (11) for connecting to a vehicle, wherein the first base surface (11) corresponds to a first contour circle (a) at different positions on different models of vehicles;
a shock-tower assembly (2), on which a second base surface (21) for connecting to the first base surface (11) is disposed, wherein the first contour circles (a) on the different models of vehicles each are tangent to a second contour circle (b) of the second base surface (21); the first base surface (11) is polygonal and tangent to the first contour circle a; the first base surface (11) is provided with a plurality of first mounting holes (12) spaced apart along a circumferential direction of a center of the first contour circle (a); and the second base surface (21) is provided with second mounting holes (22) corresponding to the first mounting holes (12) thereon; and
a first reinforcement plate (41) and a second reinforcement plate (42), wherein a side wall of the shock-tower assembly (2) has a reservation surface (25) for connecting the first reinforcement plate (41) and the second reinforcement plate (42) when the shock-tower assembly (2) is installed on the different models of vehicles; and the first reinforcement plate (41) and the second reinforcement plate (42) are fixedly connected to corresponding positions on the reservation surface (25).

2. The shock-tower connection structure according to claim 1, wherein the shock-tower assembly (2) comprises:
a shock-tower body (23), the second base surface (21) being located on the shock-tower body (23); and
a front wheel cover (24), disposed with the shock-tower body (23) thereon and connected to the vehicle.

3. The shock-tower connection structure according to claim 2, further comprising:
a front longitudinal beam (3), a bottom surface of the shock-tower assembly (2) being fixedly connected to a top surface of the front longitudinal beam (3); and
a front-compartment upper side beam (4), the side wall of the shock-tower assembly (2) being fixedly connected to a side wall of the front-compartment upper side beam (4).

4. The shock-tower connection structure according to claim 3, wherein two ends of the first reinforcement plate (41) are fixedly connected to the front longitudinal beam (3) and the front-compartment upper side beam (4), respectively, and two ends of the second reinforcement plate (42) are fixedly connected to the front longitudinal beam (3) and the front-compartment upper side beam (4), respectively; the shock-tower assembly (2) is disposed between the first reinforcement plate (41) and the second reinforcement plate (42), and is fixedly connected to the first reinforcement plate (41) and the second reinforcement plate (42).

5. The shock-tower connection structure according to claim 4, wherein a side of the first reinforcement plate (41) and a side of the second reinforcement plate (42), which are opposite to one another, each are provided with arc-shaped wrap surfaces; a curvature of the wrap surface is adapted to a curvature of an outer wall of the shock-tower assembly (2), so that the outer wall of the shock-tower assembly (2) fits with the wrap surfaces when the shock-tower assembly (2) is fixed between the first reinforcement plate (41) and the second reinforcement plate (42).

6. The shock-tower connection structure according to claim 4, wherein a spacing between a top edge of the first reinforcement plate (41) and a top edge of the shock-tower assembly (2), and a spacing between a top edge of the second reinforcement plate (42) and the top edge of the shock-tower assembly (2) are greater than a preset spacing.

7. A front-compartment structure, comprising the shock-tower connection structure according to any one of claims 1 to 6.

8. A vehicle comprising the front-compartment structure according to claim 7.
